# FASCICULE DE BREVET EUROPEEN

(11) **EP 3 983 248 B1**
(45) Date de publication et mention de la délivrance du brevet: **02.08.2023**
(21) Numéro de dépôt: 20732217.3
(22) Date de dépôt: 12.06.2020
(51) Int. Cl.: B60J 10/77, B60J 10/79, B60R 13/04, B60J 10/78

(54) **MODULE DE VITRES AFFLEURANT POUR UN VEHICULE ET SON PROCEDE DE MONTAGE**
BÜNDIGES FENSTERMODUL FÜR EIN FAHRZEUG UND VERFAHREN ZUR MONTAGE DAVON
FLUSH WINDOW MODULE FOR A VEHICLE AND METHOD FOR MOUNTING SAME

(30) Priorité: 17.06.2019 FR 1906486
(43) Date de publication de la demande: 20.04.2022
(73) Titulaire: HUTCHINSON, 75008 Paris (FR)
(72) Inventeur: BARATIN, Sylvain, 45120 CORQUILLEROY (FR); LAJOUX, Cyril, 45700 VIMORY (FR)
(74) Mandataire: Gevers & Orès
(86) Numéro de dépôt international: PCT/EP2020/066272
(87) Numéro de publication internationale: WO 2020/254201

(56) Documents cités:
- WO-A1-2014/191812
- US-A1- 2008 224 501

## Description

### Domaine technique de l'invention

La présente invention concerne un module de vitres pour un véhicule, en particulier automobile, ainsi que son procédé de montage. Ces vitres sont avantageusement du type « flush », c'est-à-dire affleurant.

### Arrière-plan technique

L'arrière-plan technique comprend notamment les documents US-A1-2008/224501 et WO-A1-2014/191812.

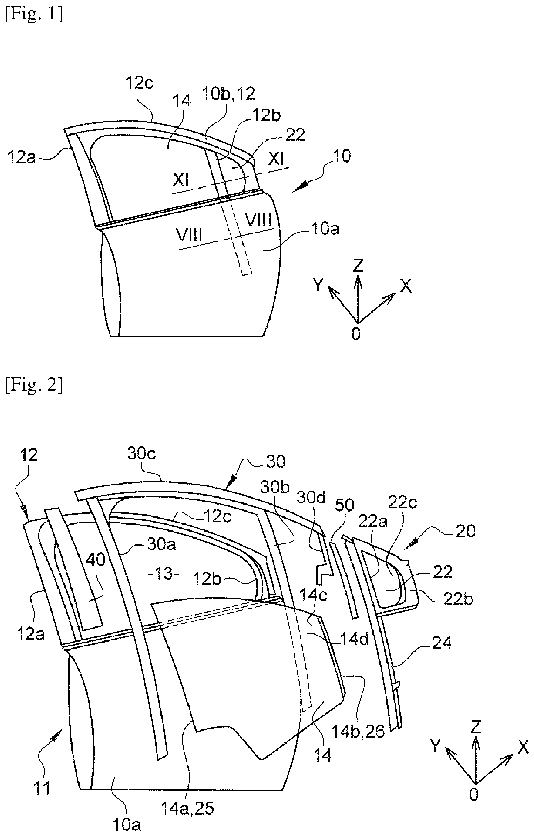

Un véhicule comprend des portes qui comportent chacune en général une vitre fixe 22 et une vitre mobile 14. Comme cela est visible à la figure 1, une porte 10 comprend une partie basse ou caisson 10a et une partie haute 10b qui forme un cadre 12 destiné à entourer les vitres 14, 22. La vitre 22 est fixe et la vitre 14 peut être déplacée depuis le cadre 12 dans le caisson 10a, et inversement.

La plupart des portes, qui sont destinées à équiper des véhicules de gamme standard, sont du type « non flush », c'est-à-dire que leurs vitres n'ont pas leurs faces externes alignées ensemble.

Pour une gamme plus luxueuse de véhicule, il est connu de les équiper de vitres « flush » ou affleurantes. La porte est alors équipée d'un module de vitres « flush » ou affleurant dont les faces externes sont alignées. Cet alignement confère un aspect esthétique recherché par la clientèle.

Dans la technique actuelle, les technologies proposées de vitres « flush » sont relativement complexes à mettre en oeuvre et à installer, et sont coûteuses.

La présente invention propose un perfectionnement qui est simple, efficace et économique.

### Résumé de l'invention

L'invention propose un module de vitres pour un véhicule, en particulier automobile, comprenant :
- une vitre fixe comportant une face interne et une face externe,
- une vitre mobile comportant une face interne et une face externe, des bords des vitres étant en regard l'un de l'autre et définissant entre eux un jeu, et les faces externes des vitres étant sensiblement alignées,
- un guide de forme allongée s'étendant le long desdits bords et fixé sur la face interne de la vitre mobile,
- un montant de forme allongée s'étendant le long desdits bords et fixé sur la face interne de la vitre fixe, ce montant ayant en section transversale une forme générale en U ou L dont une branche latérale s'étend le long et en regard dudit jeu, le montant comportant une face interne et une face externe qui définit au moins en partie un logement s'étendant le long desdits bords et destiné à recevoir au moins une partie du guide,
caractérisé en ce qu'un enjoliveur est rapporté et fixé sur ladite face interne du montant, cet enjoliveur ayant une forme allongée et s'étendant le long du montant, cet enjoliveur comportant au moins un organe de retenue qui est en saillie sur ladite face externe du montant et qui comprend une face de retenue de ladite partie du guide dans ledit logement, dans une direction sensiblement perpendiculaire à un plan qui est perpendiculaire aux faces internes des vitres et qui passe à travers ledit jeu.

L'invention propose ainsi de retenir le guide dans le logement du montant par l'intermédiaire d'un enjoliveur rapporté sur le montant. L'enjoliveur est monté sur la face interne du montant, c'est-à-dire depuis l'intérieur du véhicule ou de son habitacle.

Dans la présente demande, on entend en effet par « interne », « intérieur », etc., des éléments situés dans le véhicule ou orientés vers l'intérieur du véhicule. Les expressions « externe », extérieur », etc., font donc référence à des éléments situés à l'extérieur du véhicule ou orientés vers l'extérieur.

L'invention permet notamment de simplifier le montage du module. En effet, lorsque la vitre équipée du guide est montée dans le caisson d'une porte et que le guide est engagé dans le logement du montant, l'enjoliveur n'est pas encore monté donc son organe de retenue ne gêne pas ce montage. Une fois en place, l'enjoliveur est monté sur le montant, ce qui peut permettre d'assurer à la fois le positionnement du guide et donc de la vitre, ainsi que le verrouillage de l'ensemble. Avantageusement, l'enjoliveur a une finition intérieure soignée visible depuis l'intérieur du véhicule et peut donc participer à l'esthétique de l'habitable.

Les vitres sont « flush ». De manière préférée, les faces externes des vitres sont également alignées avec des faces externes d'éléments adjacents et en particulier un ou plusieurs élément(s) disposé(s) entre ces vitres. C'est par exemple le cas d'un profilé, d'un joint, d'une lèvre d'étanchéité, etc., qui serait intercalé(e) entre les bords en regard des vitres.

Le module selon l'invention peut comprendre une ou plusieurs des caractéristiques suivantes, prises isolément les unes des autres ou en combinaison les unes avec les autres :
- l'enjoliveur comprend plusieurs organes de retenue répartis le long d'au moins une partie de l'enjoliveur ;
- ledit au moins un organe de retenue traverse une ouverture dudit montant.
- ledit au moins un organe de retenue est en appui sur un bord dudit montant qui s'étend le long des bords des vitres ;
- ledit enjoliveur comprend au moins une dent d'accrochage sur ledit montant ;
- ledit au moins un organe de retenue comprend une dent d'accrochage, qui prend de préférence appui sur ladite face externe du montant ;
- ladite face de retenue prend directement appui sur ladite partie du guide ;
- ledit au moins un organe traverse un orifice d'un joint de coulisse engagé au moins en partie dans ledit logement et définissant lui-même un espace de réception de ladite partie du guide ;
- ladite face de retenue prend appui sur ladite partie du guide par l'intermédiaire d'une paroi d'un joint de coulisse engagé au moins en partie dans ledit logement et définissant lui-même un espace de réception de cette partie du guide ;
- ledit au moins un organe est engagé dans une rainure du joint de coulisse.
- le joint de coulisse a une partie en forme de U comprenant deux brins ascendants reliés par un brin supérieur, ladite rainure s'étendant sur sensiblement toute la longueur d'un des brins ascendants ;
- la rainure a en section une forme en U, V ou trapézoïdale ;
- le joint de coulisse ou le montant comprend au moins une lèvre située au niveau dudit jeu et en appui sur lesdits bords des vitres et/ou
- le joint de coulisse ou le montant comprend au moins une lèvre en appui sur la face interne de la vitre mobile et/ou sur la face interne de la portion du guide ;
- le guide comprend au moins une patte interne sur laquelle la face de retenue est destinée à venir en appui directement ou indirectement ;
- le guide comprend deux pattes internes alignées et à distance l'une de l'autre et sur lesquelles la face de retenue est destinée à venir en appui directement ou indirectement ;
- le montant s'étend longitudinalement au-delà du bord de la vitre fixe et comprend une partie destinée à être logée dans un caisson de porte, cette partie n'étant pas destinée à être recouverte par ledit enjoliveur ;
- ladite partie comprend au moins une patte de fixation au caisson ;
- ladite partie comprend une face externe sur laquelle sont situés en saillie des organes de retenue configurés pour coopérer avec ladite partie du guide et/ou un joint de coulisse.

La présente invention concerne également un véhicule, en particulier automobile, comportant au moins un module tel que décrit ci-dessus.

La présente invention concerne également un procédé de montage d'un module tel que décrit ci-dessus, dans lequel il comprend les étapes de :
a) montage de la vitre mobile à côté de la vitre fixe, et insertion de ladite partie du guide dans le logement du montant, et
b) montage de l'enjoliveur sur le montant de façon à ce que la face de retenue dudit au moins un organe coopère directement ou indirectement avec la partie du guide.

Le procédé selon l'invention peut comprendre une ou plusieurs des étapes suivantes, et également des caractéristiques du module ci-dessus, prises isolément les unes des autres ou en combinaison les unes avec les autres :
- le procédé comprend, entre les étapes a) et b), une étape i) de montage d'un joint de coulisse dans le logement du montant, la partie du guide étant engagée dans un espace de réception du joint de coulisse à l'étape b) ;
- la partie du guide prend appui et déforme le joint de coulisse lors de l'étape i) ;
- la partie du guide est insérée grâce à une déformation élastique locale ou réversible du joint de coulisse lors de l'étape i)
- le montant comprend une partie recevant une partie du joint de coulisse et l'enjoliveur, et une autre partie recevant une autre partie du joint de coulisse et destinée à s'étendre dans un caisson de porte ;
- l'enjoliveur est fixé sur le montant par encliquetage élastique ;
- le montant et l'enjoliveur sont au moins en partie réalisés en matière plastique ; bien que la réalisation d'une seule pièce d'un montant et d'un enjoliveur serait réalisable, en particulier lorsqu'ils sont réalisés dans le même matériau, cet aspect ne fait pas partie de l'invention car le montage d'un guide dans un tel ensemble serait trop complexe voire impossible à réaliser en pratique.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique en perspective d'une porte de véhicule,
[Fig.2] la figure 2 est une vue schématique en perspective éclatée de la porte de la figure 1,
[Fig.3] la figure 3 est une vue schématique en perspective de certains éléments de la porte de la figure 1,
[Fig.4] la figure 4 est une vue schématique en perspective d'une vitre fixe, d'un montant et d'un enjoliveur pour un module selon un mode de réalisation de l'invention,
[Fig.5] la figure 5 est une vue schématique en perspective de la vitre fixe et du montant de la figure 4,
[Fig.6] la figure 6 est une autre vue schématique en perspective de la vitre fixe et du montant de la figure 4,
[Fig.7] la figure 7 est une vue schématique en perspective de l'enjoliveur de la figure 4,
[Fig.8] la figure 8 est une vue schématique en coupe transversale d'un module selon le mode de réalisation de la figure 4, la coupe étant réalisée dans un caisson de porte,
[Fig.9] la figure 9 est une vue schématique en perspective d'une portion du montant du module de la figure 8,
[Fig.10] la figure 10 est une autre vue schématique en perspective d'une portion du montant du module de la figure 8,
[Fig.11] la figure 11 est une vue schématique en coupe transversale du module de la figure 8 sans la vitre mobile et son guide, la coupe étant réalisée au niveau de la vitre fixe,
[Fig.12] la figure 12 est une vue schématique en coupe similaire à celle de la figure 11 et illustrant une étape d'un procédé de montage selon l'invention,
[Fig.13] la figure 13 est une vue schématique en coupe similaire à celle de la figure 11 et illustrant une autre étape du procédé de montage selon l'invention,
[Fig.14] la figure 14 est une vue schématique en coupe similaire à celle de la figure 11 et illustrant une autre étape du procédé de montage selon l'invention,
[Fig.15] la figure 15 est une vue schématique en coupe similaire à celle de la figure 11 et illustrant une autre étape du procédé de montage selon l'invention,
[Fig.16] la figure 16 est une vue schématique en coupe similaire à celle de la figure 11 et illustrant une variante de réalisation du module selon l'invention,
[Fig.17] la figure 17 est une vue schématique en perspective de l'enjoliveur et d'une partie du montant de la variante de la figure 16,
[Fig.18] la figure 18 est une vue schématique en coupe similaire à celle de la figure 11 et illustrant une variante de réalisation du module selon l'invention,
[Fig.19] la figure 19 est une vue schématique en perspective de l'enjoliveur et d'une partie du montant de la variante de la figure 16,
[Fig.20] la figure 20 est une autre vue schématique en perspective de l'enjoliveur et d'une partie du montant de la variante de la figure 16,
[Fig.21] la figure 21 est une vue schématique en coupe similaire à celle de la figure 11 et illustrant une variante de réalisation du module selon l'invention,
[Fig.22] la figure 22 est une vue schématique en coupe similaire à celle de la figure 11 et illustrant une variante de réalisation du module selon l'invention.

### Description détaillée de l'invention

Dans la description qui suit et en référence aux dessins, on utilise un repère tridimensionnel dont l'axe X est horizontal et orienté dans la direction de déplacement du véhicule, l'axe Y est horizontal et orienté vers l'intérieur du véhicule, et l'axe Z est vertical et orienté vers le haut. Les termes « avant » et « arrière » font référence à l'avant et à l'arrière du véhicule par rapport à l'axe X. Les termes « intérieur » et « extérieur » font référence à l'intérieur et à l'extérieur du véhicule par rapport à l'axe Y. Enfin, les termes « inférieur » ou « bas/basse » et « extérieur » ou « haut/haute » font référence au bas ou au haut du véhicule par rapport à l'axe Z.

Les figures 1 à 3 montrent une porte 10 d'un véhicule, qui comporte un bâti 11, un module 20 avec des vitres fixe et mobile, un joint de coulisse 30, et des enjoliveurs 40, 50. Dans l'exemple représenté, la porte 10 est une porte avant de véhicule.

Le bâti 11 comporte une partie basse ou caisson 10a et un cadre supérieur 12 définissant une ouverture 13, ce cadre supérieur comportant deux montants ascendants, respectivement arrière 12a et avant 12b, reliés par un rail supérieur 12c.

Le module 20 comprend une vitre fixe 22 et une vitre mobile 14.

La vitre fixe 22 est montée dans une partie, ici avant, de l'ouverture 13, et est solidaire d'un montant ascendant 24 s'étendant le long d'un bord ascendant, ici arrière 22a, de la vitre fixe 22 et s'étendant le long de l'ouverture 13 et en deçà d'une ligne ceinture de caisse dans le bâti. Elle s'étend donc au moins en partie dans le caisson 10a du bâti 11. La vitre fixe 22 comprend un bord ascendant avant 22b s'étendant le long du montant avant 12b. Les faces interne et externe de la vitre 22 sont respectivement désignées par les références 22c et 22d.

La vitre mobile 14 est apte à fermer le reste de l'ouverture 13, en arrière de la vitre fixe 22. La vitre 14 comporte deux bords ascendants, respectivement arrière 14a et avant 14b, le long desquels sont fixés des guides 25, 26. Chaque guide 25, 26 a une forme allongée et est fixé par toute technique appropriée et par exemple par collage sur une face interne 14c de la vitre 14. La face externe de la vitre 14 est désignée par la référence 14d.

Le joint de coulisse 30 a une forme générale en U inversé et comporte deux brins ascendants, respectivement arrière 30a et avant 30b, reliés par un brin supérieur 30c. Le brin arrière 30a s'étend le long du montant arrière 12a, et le brin avant 30b s'étend le long du montant 24. Le brin supérieur 30c se prolonge vers l'avant et est reliée à son extrémité avant à un brin ascendant 30d supplémentaire. Le prolongement du brin 30c s'étend le long du bord supérieur 22e de la vitre 22 et d'une partie avant du rail supérieur 12c. Le brin supplémentaire 30d s'étend le long du bord avant 22b de la vitre fixe 22 et du montant avant 12b.

Un premier enjoliveur externe, arrière 40, est rapporté sur le brin arrière 30a et fixé sur le montant arrière 12a. Un second enjoliveur externe, avant 50, est rapporté sur le brin avant 30b et fixé sur le montant 24.

L'invention propose un module 60 de vitres « flush » et une porte 10 de véhicule comportant un tel module. Un module 60 de vitres flush au sens de l'invention est un module dont les vitres fixe 22 et mobile 14 ont leurs faces externes 22d, 14d qui sont sensiblement alignées.

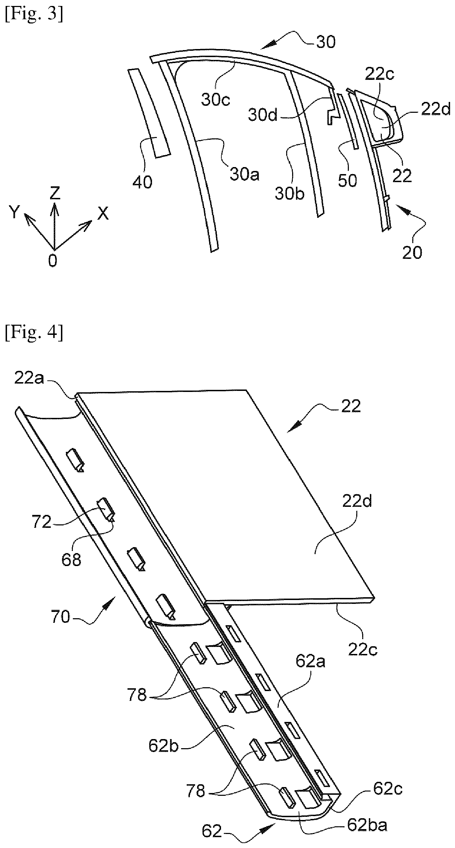

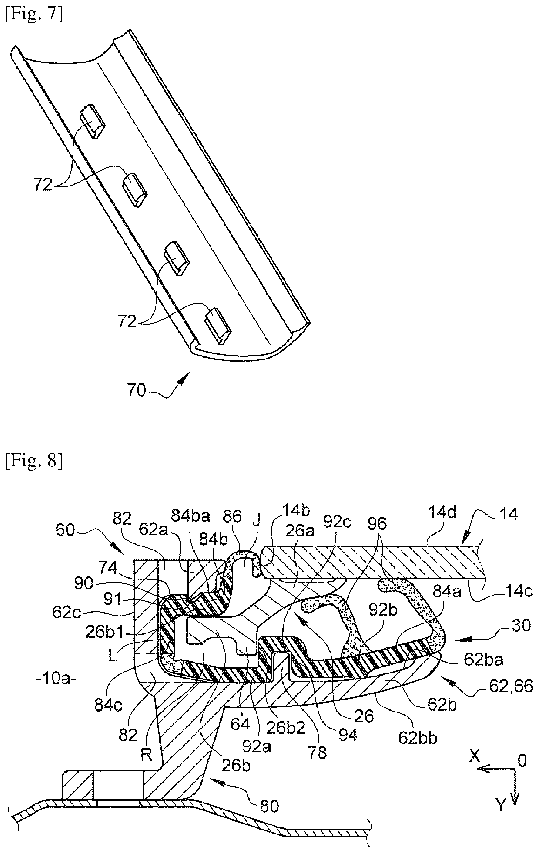

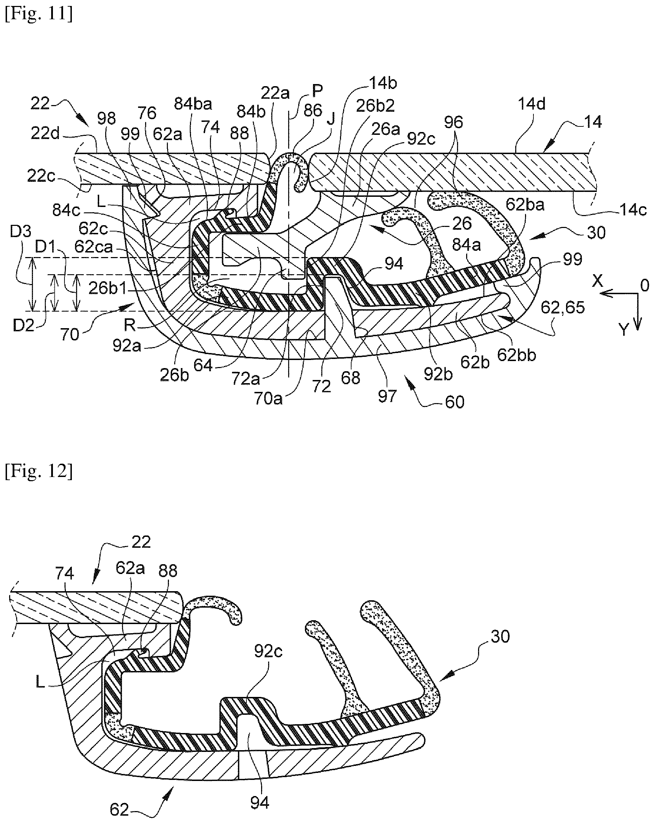

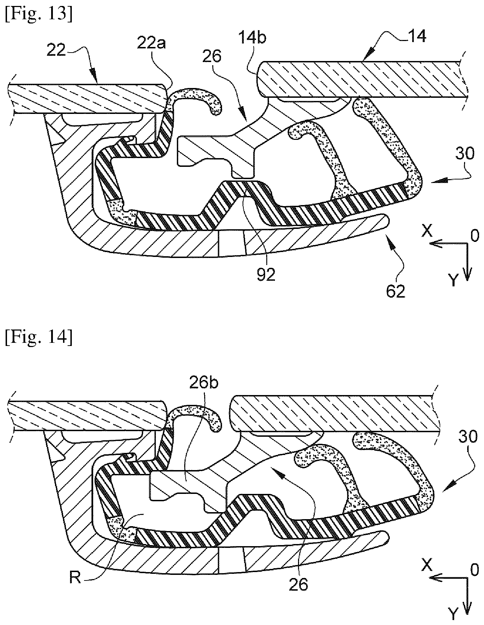

Les figures 4 à 15 représentent un premier mode de réalisation de l'invention. Le module 60 est représenté en coupe à la figure 11, cette vue correspondant à la ligne de coupe XI-XI de la figure 1 qui est située au niveau du cadre 12 de la porte. Le module 60 est représenté en coupe à la figure 8, cette vue correspondant à la ligne de coupe VIII-VIII de la figure 14 qui est située dans le caisson 20a.

En plus des vitres 14, 22, l'exemple représenté du module 60 comprend :
- au moins un guide 26 de forme allongée s'étendant le long du bord ascendant avant 14b de la vitre mobile 14, et fixé sur sa face interne 14c,
- un montant 62 de forme allongée s'étendant le long du bord ascendant arrière 22a de la vitre fixe 22, et fixé sur sa face interne 22c.

Le guide 26 est visible aux figures 8 et 11 notamment. Il comprend deux parties, à savoir une partie de fixation 26a et une partie d'extension 26b. La partie de fixation 26a comprend une surface d'appui et de fixation sur la face interne 14c. La fixation peut être réalisée par tout moyen approprié et par exemple par collage. La colle peut être en partie logée dans des évidements de cette surface.

La partie d'extension 26b s'étend du côté de la vitre fixe 22 et comprend une surface externe 26b1 et une portée 26b2 qui est orientée suivant l'axe X vers l'arrière.

Pour faciliter le guidage de la vitre 14, tout en facilitant son montage et en optimisant sa masse, le guide 26 peut comprendre des pattes 64 orientées suivant l'axe Y vers l'intérieur. Ces pattes 64 permettent de prolonger localement la portée 26b2 vers l'intérieur du véhicule. Ces pattes 64 sont par exemple au nombre de deux et sont situées respectivement au voisinage des extrémités longitudinales du guide 26.

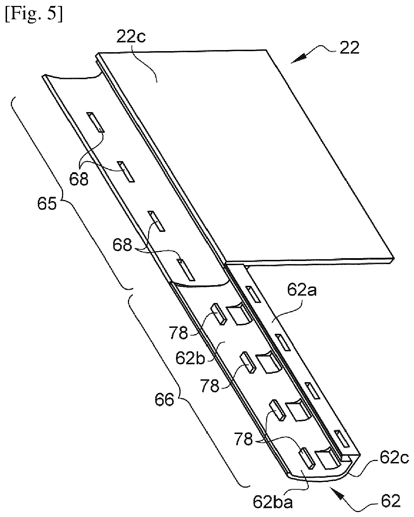

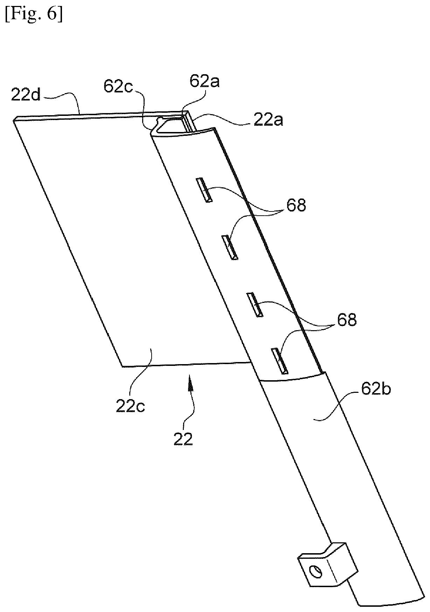

Le montant 62 est notamment visible aux figures 5 et 6. Il a en section transversale une forme générale en U ou L et comprend deux branches latérales 62a, 62b reliées entre elles par une paroi médiane 62c. Les branches 62a, 62b et la paroi 62c définissent entre elles un logement L. Le montant 62 comprend en outre deux parties longitudinales, à savoir une première partie ou partie supérieure 65 qui s'étend le long du bord ascendant arrière 22a de la vitre 22 au niveau du cadre 12 de la porte 10 (figures 5, 6 et 11), et une seconde partie ou partie inférieure 66 qui s'étend à l'intérieur du caisson 10a de la porte 10 (figures 8-10).

La partie supérieure 65 du montant 62 est fixée à la vitre fixe 22, sur sa face interne 22c, par l'intermédiaire de la branche externe 62a. La branche externe 62a s'étend sensiblement parallèlement à la face interne 14c. Cette branche externe 62a comprend une surface d'appui et de fixation sur la face interne 22c. La fixation peut être réalisée par tout moyen approprié et par exemple par collage, ou par adhésion via une matière TPE injectée au cours de l'encapsulation du montant avec la vitre (qui a été de préférence préalablement primérisée localement). Dans le cas d'un collage, la colle peut être en partie logée dans des évidements de cette surface.

La paroi médiane 62c s'étend perpendiculairement aux vitres 14, 22, vers l'intérieur du véhicule. La branche interne 62b s'étend depuis la vitre fixe 22 du côté de la vitre mobile 14, parallèlement aux faces internes 14c, 22c des vitres. Elle s'étend ici en regard d'une partie de la face interne 14c de la vitre mobile 14 ainsi que d'un jeu J s'étendant entre les bords 14b, 22a en regards des vitres (figure 11).

La branche 62b comprend des ouvertures 68 de passage d'organes de retenue 72 portés par un enjoliveur 70. Ces ouvertures 68 sont régulièrement espacées suivant l'axe Z et sont par exemple au nombre de quatre (figures 5 et 6). Chacune de ces ouvertures 68 a par exemple une forme générale rectangulaire. Comme on le voit dans les dessins, les ouvertures 68 sont de préférence situées, et uniquement situées, sur la partie 65 du montant 62 (figure 5).

La branche interne 62a peut comprendre une rainure longitudinale 74 débouchant vers l'intérieur (figures 8 et 11). La paroi médiane 62c peut comprendre une encoche ou rainure longitudinale 76 débouchant suivant l'axe X, du côté opposé au logement L, en particulier le long de la partie 65 (figure 11).

La partie inférieure 66 du montant 62 comprend des organes de retenue 78 qui sont en saillie sur la face externe 62ba de sa branche externe 62b. Ces organes 78 sont par exemple situés en lieu et place des ouvertures 68 précitées. Ces organes 78 sont régulièrement espacés suivant l'axe Z et sont par exemple au nombre de quatre (figures 8-10). Chacun de ces organes 78 a par exemple une forme générale parallélépipédique.

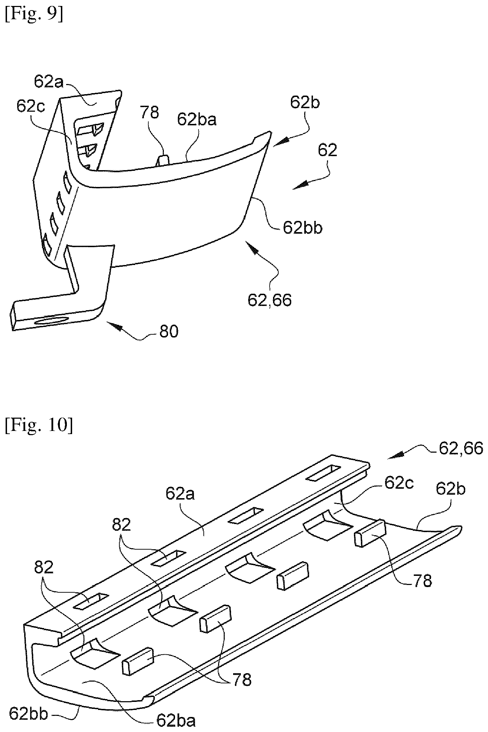

Cette branche externe 62a comprend sur sa face interne 62bb une patte ou bride de fixation 80 à l'intérieur du caisson 10a de la porte 10. La bride 80 a une forme générale en L et est formée d'une seule pièce avec le montant 62 (figures 8 et 9). Ce montant est par exemple réalisé en PP (ou PA) chargé en fibres de verre.

Par ailleurs, la paroi médiane 62c et la branche externe 62a peuvent comprendre des lumières 82 résultant du mode de fabrication de ces pièces, en particulier par moulage.

De façon connue d'un homme du métier, la fabrication de ce type de pièce par moulage peut nécessiter l'utilisation de tiroirs destinés à définir des zones et surfaces de moulage de la pièce. Les lumières 82 peuvent résulter de l'utilisation de ces tiroirs, qui sont au nombre de huit dans l'exemple représenté (voir figures 4, 5 et 10).

Une première série de tiroirs sont destinés à être déplacés en translation suivant l'axe X, à travers les lumières 82 de la paroi médiane 62c. Une seconde série de tiroirs sont destinés à être déplacés en translation suivant l'axe Y, à travers les lumières 82 de la branche externe 62a.

Comme on le voit aux figures 8 et 11, un joint de coulisse 30 du type de celui décrit en référence aux figures 1 à 3 est utilisé avec la présente invention.

Le joint 30 est monté dans le logement L et définit lui-même un espace R de réception du guide 26, et en particulier de sa partie d'extension 26b.

En section ou coupe transversale, le joint 30 une forme générale en U et comprend également deux branches, respectivement interne 84a et externe 84b, reliées entre elles par une paroi médiane 84c.

La branche externe 84b s'étend sur la branche externe 62a du montant 62, à l'intérieur de celle-ci, et est reliée à son bord longitudinal situé du côté de la vitre mobile 14, à une lèvre longitudinale 86. Cette lèvre 86 occupe au moins une partie du jeu J entre les bords 14b, 22a en regard des vitres 14, 22, et prend appui sur ces bords pour assurer une étanchéité à travers le jeu J. Du côté opposé, la branche externe 84b est reliée à la paroi médiane 84c qui s'étend le long et sur la paroi médiane 62c du montant 62.

La branche interne 84a s'étend sur et à l'extérieur de la branche interne 62b du montant 62.

Dans la partie supérieure 65 du montant 62, la face externe 84ba de la branche 84b comprend une excroissance longitudinale 88 qui est engagée dans la rainure 74 de la branche externe 62a en vue de limiter les déplacements de la branche 84b suivant l'axe X.

Dans la partie inférieure 66 du montant 62, la face externe 84ba de la branche 84b comprend une rainure ou des encoches 90 de réception d'ergots 91 de la branche externe 62a en vue de limiter les déplacements de la branche 84b suivant l'axe X.

La branche interne 84a du joint 30 comprend deux parties longitudinales, respectivement avant 92a et arrière 92b, reliées entre elles par une partie 92c à section en U, C ou V. Cette section est en U dans l'exemple représenté. Les parties 92a, 92b s'étendent sur et le long de la face externe 62ba de la branche interne 62b. La partie en U 92c est en saillie sur cette face 62ba et définit une rainure longitudinale 94 qui débouche vers l'intérieur. Cette rainure 94 s'étend sur toute la longueur du brin ascendant 30b du joint de coulisse 30, qui peut être facilement réalisé par extrusion par exemple.

La branche interne 84a est en outre reliée, du côté opposé à la paroi médiane 84c, à une ou des lèvres d'étanchéité 96 qui sont en appui sur la face interne 14c de la vitre mobile 14 et/ou sur la face interne de la partie 26a du guide 26.

L'enjoliveur 70 est visible aux figures 4 et 7 notamment. Contrairement à l'exemple des figures 1 à 3, cet enjoliveur 70 est ici monté depuis l'intérieur du véhicule, sur le montant 62.

Dans l'exemple représenté, l'enjoliveur 70 est destiné à recouvrir la face interne 62bb de la branche interne 62b ainsi que la face 62ca de la paroi médiane 62c, qui relie cette face externe 62ba à la face interne 22c de la vitre fixe 22.

L'enjoliveur 70 est par ailleurs rapporté et fixé sur la partie supérieure 65 uniquement du montant 62. La partie inférieure 66 de ce montant 62 est situé à l'intérieur du caisson 10a de la porte 10 et n'a pas besoin de recevoir une partie de l'enjoliveur 70.

L'enjoliveur 70 est formé d'une seule pièce et est représenté seul à la figure 7. Il a ici une forme générale en L en section et comprend deux parois 97, 98 sensiblement perpendiculaires. Une de ses parois, référencée 97, recouvre la face interne 62bb de la branche interne 62b, et l'autre de ses parois, référencée 98, recouvre la face 62ca précitée de la paroi médiane 62c.

L'enjoliveur 70 est ici fixé sur le montant 62 par encliquetage élastique et comprend pour cela des dents d'accrochage 99.

Comme cela est visible à la figure 11, l'enjoliveur 70 comprend une première dent d'accrochage 99 à son bord longitudinal situé du côté du bord longitudinal libre du montant 62. Cette dent d'accrochage 99 prend appui sur ce bord libre du montant, suivant l'axe X, voire également suivant l'axe Y vers l'intérieur.

L'enjoliveur 70 comprend une seconde dent d'accrochage 99 à son bord longitudinal opposé. Cette dent d'accrochage 99 est engagée dans la rainure 76 précitée de la paroi médiane 62c du montant 62.

Enfin, l'enjoliveur 70 comprend sur une face externe 70a, c'est-à-dire sur sa surface en regard de la face interne 62ba de la branche 62b du montant 62, les organes de retenue 72 en saillie qui ont pour fonction de coopérer avec le guide 26 en vue de son maintien en position.

Dans l'exemple représenté, cette coopération est indirecte. Les organes 72, ici au nombre de quatre, sont régulièrement espacés le long de l'enjoliveur 70 et ont une forme générale parallélépipédique. L'extrémité libre ou le sommet de chacun de ces organes 72 peut être arrondi ou biseauté. Cette forme est de préférence complémentaire de celle de la rainure 94 définie par la partie en U 92c du joint de coulisse 30, comme dans l'exemple représenté. Les organes72 traversent les ouvertures 68 du montant 62 qui ont des formes et des dimensions adéquates, et sont reçus dans la rainure 94 du joint de coulisse 30.

Comme on le voit à la figure 11, les organes 72 sont en saillie sur la face externe 62ba du montant 62 sur une distance D1. La partie en U 92c du joint de coulisse 30 s'étend autour de ces organes 72 et définissent une distance ou hauteur en saillie D2 par rapport à la face externe 62ba du montant 62. La différence de distance D2-D1 correspond sensiblement à l'épaisseur de paroi de la partie en U 92c du joint de coulisse 30, et plus particulièrement de sa paroi de fond.

En position montée, la partie d'extension 26b du guide 26 est située à une distance D3 de la face externe 62ba de la branche interne 62a. Cette distance est mesurée entre cette face 62ba et l'extrémité libre des pattes 64 du guide 26. La distance D3 est inférieure à D2 de façon à ce que le guide 26 puisse venir en appui par sa portée 26b2 sur les organes 72 ou du moins la partie en U 92c du joint 30 montée sur ces organes 72. La distance D3 peut être inférieure, égale ou supérieure à D1.

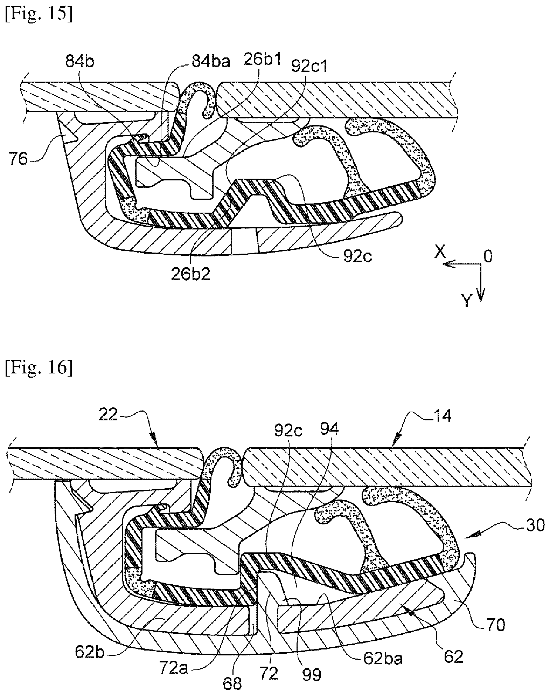

On se réfère désormais aux figures 12 à 15 qui illustrent des étapes de montage d'un module 62 selon l'invention. Le joint de coulisse 30 est de préférence réalisé dans un matériau souple en élastomère et est monté en premier dans le logement L définit par le montant 62 (figure 12). Il est installé dans la partie supérieure 65 du montant 62 de façon à ce que ses excroissances 88 soient engagées dans la rainure 74 de la branche externe 62a du montant 62, et dans la partie inférieure 66 du montant 62 de façon à ce que son encoche 90 reçoive les ergots 91 de cette branche externe 62a (figure 8). Par ailleurs, la rainure 94 de la partie en U 92c reçoit les organes de retenue 72 de la partie inférieure 66 du montant 62 (figure 8). Le montage de la partie inférieure du joint de coulisse 30 dans le caisson 10a de la porte 10 peut être réalisé soit par un mouvement en Z puis en X-Y via les ajours de la paroi intérieure du caisson, soit quasiment en aveugle par insertion en Z. Ce deuxième mode de montage est toutefois simplifié par le fait que l'opérateur de montage peut faire coulisser le brin ascendant 30a du joint suivant l'axe Z à l'intérieur du logement L du montant 62, de façon à ce que les organes 78 et les ergots 91 glissent respectivement dans la rainure 94 et l'encoche 90. La vitre mobile 14 équipée du guide 26 est ensuite montée dans la porte 10 et glissée dans le caisson 10a de porte, comme illustré aux figures 13 à 15. Il est pour cela présenté de façon à rapprocher son bord 14b du bord 22a de la vitre fixe 22. A titre d'exemple, cela peut se faire par une première translation de la vitre 14 suivant l'axe Y, vers l'intérieur du véhicule (figure 13), puis une seconde translation de la vitre 14 suivant l'axe X, vers la vitre 22 (figures 14 et 15). Lors de la première translation, le guide 26 peut prendre appui sur la partie en U 92c du joint 30 et le déformer élastiquement. Lors de la seconde translation, la partie d'extension 26b du guide 26 pénètre dans l'espace de réception R défini par le joint 30 et peut prendre appui à la fois, de part sa surface 26b1 avec la face interne 84ba de la branche externe 84b du joint 30, et de part sa portée 26b2 sur la face latérale avant 92c1 de la partie en U 92c. L'enjoliveur 70 est alors rapporté et fixé sur le montant 62. Sa dent d'accrochage 99 est d'abord engagée sur le bord libre du montant 62 puis ses organes de retenue 72 sont engagés dans les ouvertures 68 du montant 62 et la rainure 94 de la partie en U 92c du joint 30 (figure 11). Son autre dent d'accrochage 99 est ensuite engagée dans la rainure 76 du montant 62. Cette dernière opération nécessite une déformation élastique de l'enjoliveur 70 qui peut être permis par son matériau, de préférence plastique. L'enjoliveur peut être réalisé en mono-matière ou bi-matière par exemple. Le montant 62 peut être réalisé dans un matériau plastique également et par exemple dans le même matériau que l'enjoliveur. On obtient alors l'assemblage de la figure 11 dans lequel les organes de retenue 72 coopèrent indirectement avec le guide 26 pour assurer son maintien en particulier suivant l'axe X. Les organes de retenue 72 comprennent ainsi des faces de retenue 72a du guide 26 dans ledit logement L, dans une direction sensiblement perpendiculaire à un plan P qui est perpendiculaire aux faces internes 14c, 22c des vitres 14, 22 et qui passe à travers le jeu J entre les bords 14a, 22a de ces vitres (figure 11).

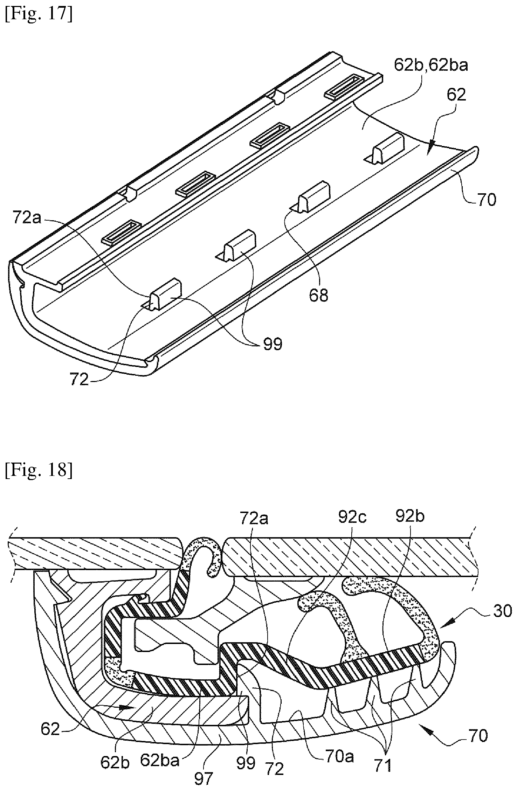

Les figures 16 et 17 illustrent une variante de réalisation de l'invention qui diffère du précédent mode de réalisation notamment en ce que la partie en saillie 92c du joint de coulisse 30 a ici en section une forme générale en V ou trapézoïdale. Par ailleurs, les organes de retenue 72 portés par l'enjoliveur 70 comprennent chacun une dent d'accrochage 99.

Ces dents 99 sont situées du côté du bord longitudinal libre du montant 62, c'est-à-dire du côté opposé aux faces de retenue 72a, et coopérant par appui avec la face externe 62ba de la branche interne 62b du montant 62. Ces dents 99 assurent une bonne fixation de l'enjoliveur 70 sur le montant 62. Il est ainsi possible de conserver des jeux de montage plus importants entre les organes 72 et les ouvertures 68 du montant 62 d'une part, et entre les organes et la rainure 94 de la partie en V 92c d'autre, ce qui permet de faciliter le montage de ces pièces.

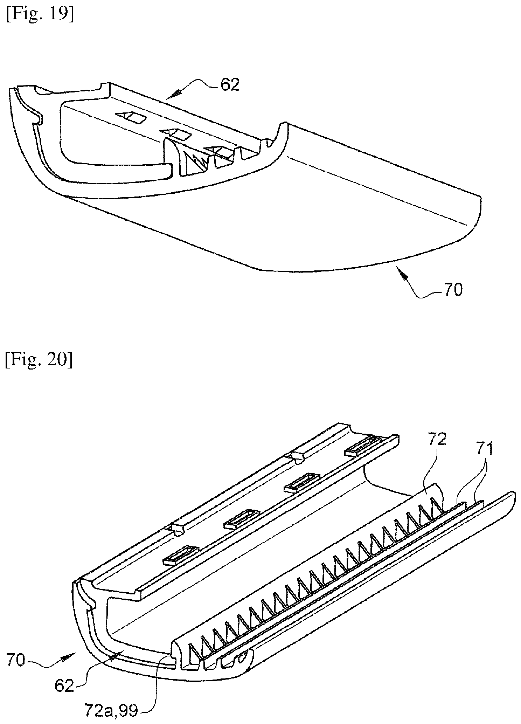

Les figures 18 à 20 illustrent une autre variante de réalisation de l'invention qui diffèrent du premier mode de réalisation notamment en ce que la partie en saillie 92c du joint de coulisse 30 a ici en section une forme générale en V ou trapézoïdale. Par ailleurs, les organes de retenue 72 portés par l'enjoliveur 70 comprennent chacun une dent d'accrochage 99. Ces dents 99 sont situées du côté des faces de retenue 72a. Ces dents 99 assurent une bonne fixation de l'enjoliveur 70 sur le montant 62, en coopérant par appui avec la face externe 62ba de la branche interne 62b du montant 62.

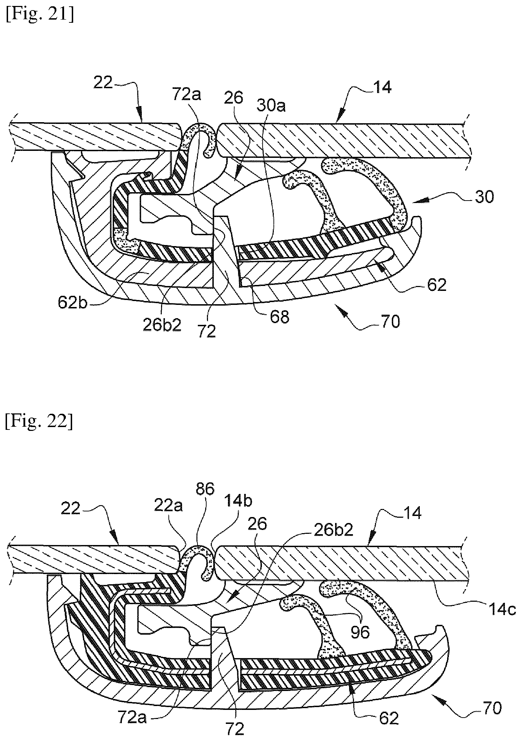

La variante de réalisation de la figure 21 diffère du premier mode de réalisation de l'invention notamment en ce que l'organe de retenue 72 de l'enjoliveur 70 traversent des ouvertures 68 du montant 62 mais aussi des orifices 30a du joint de coulisse 30 qui ne comprend ainsi pas de partie en U 92c. Les organes 72 comprennent des faces de retenue 72a sur lesquelles la portée 26b2 du guide 26 peut directement venir en appui.

On voit dans ce mode de réalisation que les organes 72 ne traversent pas d'ouvertures 68 mais sont en appui sur le bord longitudinal libre du montant 62. La branche interne 62b du montant 62 a une dimension le long de l'axe X qui est plus courte que celle du premier mode de réalisation. L'enjoliveur 70 et en particulier sa paroi 97 a une dimension le long de l'axe X qui est supérieure à celle de la branche 62b, et sa face interne 70a comprend des nervures longitudinales 71 d'appui du joint de coulisse 30, et en particulier de sa partie 92b.

La variante de réalisation de la figure 22 diffère du premier mode de réalisation de l'invention notamment en ce qu'elle ne comprend pas de joint de coulisse 30, le logement L du montant 62 assurant lui-même le guidage et l'étanchéité avec le guide 26 porté par la vitre mobile 14. Le montant 62 peut ainsi comprendre les lèvres d'étanchéité 86, 96 coopérant avec les bords 14b, 22a en regard des vitres 14, 22 ainsi qu'avec la face interne 14c de la vitre mobile 14.

L'organe de retenue 72 de l'enjoliveur 70 traversent des ouvertures 68 du montant 62 et comprennent des faces de retenue 72a sur lesquelles la portée 26b2 du guide 26 peut directement venir en appui.

Dans une autre variante non représentée de réalisation de l'invention, l'enjoliveur 70 pourrait comprendre à ses extrémités longitudinales des orifices de passage de vis qui seraient destinées à être cachées par des habillages appropriés à l'intérieur du véhicule.

Le module 60 selon l'invention présente de nombreux avantages, parmi lesquels :
- une meilleure compacité des tolérances selon les axes X et Y de la vitre fixe 22 et du montant 62, qui est ainsi plus esthétique.
- un montage facilité du joint de coulisse 30 dans la porte 10,
- un montage facilité de la vitre mobile 14 et en particulier de son guide 26, dont la forme avec les pattes 64 peut permettre un indexage plus précis de la vitre par rapport à la porte selon les axes X et Y,
- un verrouillage du positionnement du joint 30 et de la vitre 14 via son guide 26, par le montage de l'enjoliveur 70 ; ce verrouillage pourrait être vérifié par un opérateur qui entendrait le son lié à l'encliquetage de l'enjoliveur 70 sur le montant 62,
- la suppression des défauts d'aspect du montant 62 du fait qu'il peut être entièrement recouvert et donc caché par l'enjoliveur 70.

## Revendications

1. Module (60) de vitres pour un véhicule, en particulier automobile, comprenant :
- une vitre fixe (22) comportant une face interne (22c) et une face externe (22d),
- une vitre mobile (14) comportant une face interne (14c) et une face externe (14d), des bords (14b, 22a) des vitres étant en regard l'un de l'autre et définissant entre eux un jeu (J), et les faces externes (14d, 22d) des vitres étant sensiblement alignées,
- un guide (26) de forme allongée s'étendant le long desdits bords et fixé sur la face interne (14c) de la vitre mobile (14),
- un montant (62) de forme allongée s'étendant le long desdits bords et fixé sur la face interne (22c) de la vitre fixe (22), ce montant ayant en section transversale une forme générale en U ou L dont une branche latérale (62b) s'étend le long et en regard dudit jeu, le montant comportant une face interne (62bb) et une face externe (62ba) qui définit au moins en partie un logement (L) s'étendant le long desdits bords et destiné à recevoir au moins une partie (26b) du guide,
un enjoliveur (70) étant rapporté et fixé sur ladite face interne (62bb) du montant, cet enjoliveur ayant une forme allongée et s'étendant le long du montant, cet enjoliveur comportant au moins un organe de retenue (72), **caractérisé en ce que** cet organe de retenue (72) est en saillie sur ladite face externe (62ba) du montant et comprend une face de retenue (72a) de ladite partie du guide dans ledit logement, dans une direction sensiblement perpendiculaire à un plan (P) qui est perpendiculaire aux faces internes des vitres et qui passe à travers ledit jeu.

2. Module (60) selon la revendication 1, dans lequel l'enjoliveur (70) comprend plusieurs organes de retenue (72) répartis le long d'au moins une partie de l'enjoliveur.

3. Module (60) selon la revendication 1 ou 2, dans lequel ledit au moins un organe de retenue (72) traverse une ouverture (68) dudit montant (62), ou ledit au moins un organe de retenue (72) est en appui sur un bord dudit montant (62) qui s'étend le long des bords des vitres.

4. Module (60) selon l'une des revendications précédentes, dans lequel ledit enjoliveur (70) comprend au moins une dent d'accrochage (99) sur ledit montant (62), et dans lequel ledit au moins un organe de retenue (72) comprend une dent d'accrochage (99), qui prend de préférence appui sur ladite face externe (62ba) du montant (62).

5. Module (60) selon l'une des revendications précédentes, dans lequel ladite face de retenue (72a) prend directement appui sur ladite partie (26b) du guide (26).

6. Module (60) selon la revendication 5, dans lequel ledit au moins un organe (72) traverse un orifice (30a) d'un joint de coulisse (30) engagé au moins en partie dans ledit logement (L) et définissant lui-même un espace (R) de réception de ladite partie (26b) du guide (26).

7. Module (60) selon l'une des revendications 1 à 4, dans lequel ladite face de retenue (72a) prend appui sur ladite partie (26b) du guide (26) par l'intermédiaire d'une paroi d'un joint de coulisse (30) engagé au moins en partie dans ledit logement (L) et définissant lui-même un espace (R) de réception de cette partie du guide.

8. Module (60) selon la revendication 7, dans lequel ledit au moins un organe (72) est engagé dans une rainure (94) du joint de coulisse (30).

9. Module (60) selon l'une des revendications précédentes, dans lequel le joint de coulisse (30) ou le montant (62) comprend au moins
- une lèvre (86) au niveau dudit jeu et en appui sur lesdits bords (14a, 22a) des vitres (14, 22), et/ou
- au moins une lèvre (96) en appui sur la face interne (14c) de la vitre mobile (14) et/ou sur la face interne de la partie (26a) du guide (26).

10. Module (60) selon l'une des revendications précédentes, dans lequel le guide (26) comprend au moins une patte interne (64) sur laquelle la face de retenue (72a) est destinée à venir en appui directement ou indirectement.

11. Module (60) selon l'une des revendications précédentes, dans lequel le montant (62) s'étend longitudinalement au-delà du bord (22a) de la vitre fixe (22) et comprend une partie (66) destinée à être logée dans un caisson (10a) de porte (10), cette partie n'étant pas destinée à être recouverte par ledit enjoliveur.

12. Module (60) selon la revendication 11, dans lequel ladite partie (66) comprend une face externe (62ba) sur laquelle sont situés en saillie des organes de retenue (78) configurés pour coopérer avec ladite partie (26b) du guide (26) et/ou un joint de coulisse (30).

13. Véhicule, en particulier automobile, comportant au moins un module (60) selon l'une des revendications précédentes.

14. Procédé de montage d'un module (60) selon l'une des revendications 1 à 12, dans lequel il comprend les étapes de :
a) montage de la vitre mobile (14) à côté de la vitre fixe (22), et insertion de ladite partie (26b) du guide (26) dans le logement (L) du montant (62), et
b) montage de l'enjoliveur (70) sur le montant de façon à ce que la face de retenue (72a) dudit au moins un organe (72) coopère directement ou indirectement avec la partie du guide.

15. Procédé selon la revendication précédente, dans lequel il comprend, entre les étapes a) et b), une étape i) de montage d'un joint de coulisse (30) dans le logement (L) du montant (62), la partie (26b) du guide (26) étant engagée dans un espace (R) de réception du joint de coulisse à l'étape b).

16. Procédé selon la revendication précédente, dans lequel la partie (26b) du guide (26) est insérée grâce à une déformation élastique locale du joint de coulisse (30) lors de l'étape i).

17. Procédé selon la revendication 15 ou 16, dans lequel le montant (62) comprend une partie (65) recevant une partie du joint de coulisse (30) et l'enjoliveur (70), et une autre partie (66) recevant une autre partie du joint de coulisse et destinée à s'étendre dans un caisson (1 0a) de porte (10).

18. Procédé selon l'une des revendications 14 à 17, dans lequel l'enjoliveur (70) est fixé sur le montant (62) par encliquetage élastique.

## Patentansprüche

1. Fenstermodul (60) für ein Fahrzeug, insbesondere Kraftfahrzeug, umfassend:
- ein festes Fenster (22), umfassend eine Innenseite (22c) und eine Außenseite (22d),
- ein bewegliches Fenster (14), umfassend eine Innenseite (14c) und eine Außenseite (14d), Fensterränder (14b, 22a), die einander zugewandt sind und untereinander ein Spiel (J) definieren, und wobei die Außenseiten (14d, 22d) der Fenster im Wesentlichen ausgerichtet sind,
- eine Führung (26) mit länglicher Form, die sich entlang der Ränder erstreckt und an der Innenseite (14c) des beweglichen Fensters (14) befestigt ist,
- eine Stütze (62) mit länglicher Form, die sich entlang der Ränder erstreckt und an der Innenseite (22c) des festen Fensters (22) befestigt ist, wobei diese Stütze im Querschnitt eine allgemeine U- oder L-förmige Form aufweist, bei der sich ein seitlicher Zweig (62b) entlang des Spiels und diesem zugewandt erstreckt, wobei die Stütze eine Innenseite (62bb) und eine Außenseite (62ba) umfasst, die mindestens teilweise eine Aufnahme (L) definiert, die sich entlang der Ränder erstreckt und dazu vorgesehen ist, mindestens einen Teil (26b) der Führung aufzunehmen,
eine Radkappe (70), die an der Innenseite (62bb) der Stütze angebracht und befestigt ist, wobei diese Radkappe eine längliche Form aufweist und sich entlang der Stütze erstreckt, wobei diese Radkappe mindestens ein Rückhalteorgan (72) umfasst, **dadurch gekennzeichnet, dass** dieses Rückhalteorgan (72) auf der Außenseite (62ba) der Stütze hervorsteht, und das eine Rückhalteseite (72a) des Teils der Führung in der Aufnahme umfasst, in einer Richtung im Wesentlichen senkrecht zu einer Ebene (P), die senkrecht zu den Innenseiten der Fenster ist und die durch das Spiel verläuft.

2. Modul (60) nach Anspruch 1, wobei die Radkappe (70) mehrere Rückhalteorgane (72) umfasst, die entlang mindestens eines Teils der Radkappe verteilt sind.

3. Modul (60) nach Anspruch 1 oder 2, wobei das mindestens eine Rückhalteorgan (72) eine Öffnungsfläche (68) der Stütze (62) durchquert, oder das mindestens eine Rückhalteorgan (72) auf einem Rand der Stütze (62) aufliegt, die sich entlang der Ränder der Fenster erstreckt.

4. Modul (60) nach einem der vorstehenden Ansprüche, wobei die Radkappe (70) mindestens einen Kopplungszahn (99) auf der Stütze (62) umfasst,
und wobei das mindestens eine Rückhalteorgan (72) einen Kopplungszahn (99) umfasst, der vorzugsweise auf der Außenseite (62ba) der Stütze (62) aufliegt.

5. Modul (60) nach einem der vorstehenden Ansprüche, wobei die Rückhalteseite (72a) unmittelbar auf dem Teil (26b) der Führung (26) aufliegt.

6. Modul (60) nach Anspruch 5, wobei das mindestens eine Organ (72) eine Öffnung (30a) einer Gleitverbindung (30) durchquert, die mindestens teilweise in die Aufnahme (L) eingreift und selbst einen Raum (R) zur Aufnahme des Teils (26b) der Führung (26) definiert.

7. Modul (60) nach einem der Ansprüche 1 bis 4, wobei die Rückhalteseite (72a) auf dem Teil (26b) der Führung (26) mittels einer Wand einer Gleitverbindung (30) aufliegt, die mindestens teilweise in die Aufnahme (L) eingreift und selbst einen Raum (R) zur Aufnahme dieses Teil der Führung definiert.

8. Modul (60) nach Anspruch 7, wobei das mindestens eine Organ (72) in eine Nut (94) der Gleitverbindung (30) eingreift.

9. Modul (60) nach einem der vorstehenden Ansprüche, wobei die Gleitverbindung (30) oder die Stütze (62) mindestens Folgendes umfassen
- eine Lippe (86) am Spiel und aufliegend auf den Rändern (14a, 22a) der Fenster (14, 22), und/oder
- mindestens eine Lippe (96) aufliegend auf der Innenseite (14c) des beweglichen Fensters (14) und/oder auf der Innenseite des Teils (26a) der Führung (26).

10. Modul (60) nach einem der vorstehenden Ansprüche, wobei die Führung (26) mindestens eine innere Lasche (64) umfasst, auf der die Rückhalteseite (72a) dazu vorgesehen ist, unmittelbar oder mittelbar aufzuliegen.

11. Modul (60) nach einem der vorstehenden Ansprüche, wobei sich die Stütze (62) längsverlaufend über den Rand (22a) des festen Fensters (22) hinaus erstreckt und einen Teil (66) umfasst, der dazu vorgesehen ist, in einem Tür - (10) Kasten (10a) untergebracht zu werden, wobei dieser Teil nicht dazu vorgesehen ist, von der Radkappe verdeckt zu werden.

12. Modul (60) nach Anspruch 11, wobei der Teil (66) eine Außenseite (62ba) umfasst, auf der Rückhalteorgane (78), die dazu konfiguriert sind, mit dem Teil (26b) der Führung (26) und/oder einer Gleitverbindung (30) zusammenzuwirken, hervorstehend gelegen sind.

13. Fahrzeug, insbesondere Kraftfahrzeug, umfassend mindestens ein Modul (60) nach einem der vorstehenden Ansprüche.

14. Verfahren zur Montage eines Moduls (60) nach einem der Ansprüche 1 bis 12, wobei es die folgenden Schritte umfasst:
a) Montage des beweglichen Fensters (14) neben dem festen Fenster (22) und Einsatz des Teils (26b) der Führung (26) in die Aufnahme (L) der Stütze (62), und
b) Montage der Radkappe (70) auf der Stütze derart, dass die Rückhalteseite (72a) des mindestens einen Organs (72) unmittelbar oder mittelbar mit dem Teil der Führung zusammenwirkt.

15. Verfahren nach dem vorstehenden Anspruch, wobei es zwischen dem Schritt a) und b) einen Schritt i) der Montage einer Gleitverbindung (30) in der Aufnahme (L) der Stütze (62) umfasst, wobei im Schritt b) der Teil (26b) der Führung (26) in einen Raum (R) zur Aufnahme der Gleitverbindung eingreift.

16. Verfahren nach dem vorstehenden Anspruch, wobei der Teil (26b) der Führung (26) mithilfe einer lokalen elastischen Verformung der Gleitverbindung (30) während des Schrittes i) eingesetzt wird.

17. Verfahren nach Anspruch 15 oder 16, wobei die Stütze (62) einen Teil (65), der einen Teil der Gleitverbindung (30) und der Radkappe (70) aufnimmt, und einen anderen Teil (66), der einen anderen Teil der Gleitverbindung aufnimmt und dazu vorgesehen ist, sich in einem Tür- (10) Kasten (10a) zu erstrecken, umfasst.

18. Verfahren nach einem der Ansprüche 14 bis 17, wobei die Radkappe (70) durch elastisches Einrasten auf der Stütze (62) befestigt wird.

## Claims

1. A window module (60) for a vehicle, in particular an automobile, comprising:
- a fixed window (22) comprising an internal face (22c) and an external face (22d),
- a movable window (14) comprising an internal face (14c) and an external face (14d), edges (14b, 22a) of the windows facing one another and defining a clearance (J) between them, and the external faces (14d, 22d) of the windows being substantially aligned,
- an elongated guide (26) extending along said edges and attached to the internal face (14c) of the movable window (14),
- an elongated upright (62) extending along said edges and attached to the internal face (22c) of the fixed window (22), this upright having in cross-section a general U or L shape, one lateral branch (62b) of which extends along and facing said clearance, the upright comprising an internal face (62bb) and an external face (62ba) which at least partly defines a housing (L) extending along said edges and intended to receive at least one part (26b) of the guide,
a trim element (70) being fitted and attached to said internal face (62bb) of the upright, this trim element having an elongated shape and extending along the upright, this trim element comprising at least one retaining member (72), **characterized in that** this retaining member (72) projects from said external face (62ba) of the upright and comprises a face (72a) for retaining said part of the guide in said housing, in a direction substantially perpendicular to a plane (P) which is perpendicular to the internal faces of the windows and which passes through said clearance.

2. The module (60) of claim 1, wherein the trim element (70) comprises a plurality of retaining members (72) distributed along at least one portion of the trim element.

3. The module (60) of claim 1 or 2, wherein said at least one retaining member (72) passes through an opening (68) of said upright (62), or said at least one retaining member (72) bears on an edge of said upright (62) that extends along the edges of the windows.

4. The module (60) according to any of the preceding claims, wherein said trim element (70) comprises at least one hooking tooth (99) on said upright (62), and wherein said at least one retaining member (72) comprises a hooking tooth (99), which preferably bears on said external face (62ba) of the upright (62).

5. The module (60) according to one of the preceding claims, wherein said retaining face (72a) bears directly on said part (26b) of the guide (26).

6. The module (60) according to claim 5, wherein said at least one member (72) passes through an orifice (30a) of a slide joint (30) engaged at least partly in said housing (L) and itself defining a space (R) for receiving said part (26b) of the guide (26).

7. The module (60) according to one of claims 1 to 4, wherein said retaining face (72a) bears on said part (26b) of the guide (26) by means of a wall of a slide joint (30) engaged at least partly in said housing (L) and itself defining a space (R) for receiving this part of the guide.

8. The module (60) of claim 7, wherein said at least one member (72) is engaged in a groove (94) of the slide joint (30).

9. The module (60) according to any of the preceding claims, wherein the slide joint (30) or the upright (62) comprises at least
- one lip (86) at the level of said clearance and bearing on said edges (14a, 22a) of the windows (14, 22), and/or
- at least one lip (96) bearing on the internal face (14c) of the movable window (14) and/or on the internal face of the part (26a) of the guide (26).

10. The module (60) according to one of the preceding claims, wherein the guide (26) comprises at least one internal leg (64) on which the retaining face (72a) is intended to bear directly or indirectly.

11. The module (60) according to one of the preceding claims, wherein the upright (62) extends longitudinally beyond the edge (22a) of the fixed window (22) and comprises a part (66) intended to be housed in a casing (10a) of a door (10), this part not being intended to be covered by said trim element.

12. The module (60) according to claim 11, wherein said part (66) comprises an external face (62ba) on which are located protruding retaining members (78) configured to cooperate with said part (26b) of the guide (26) and/or a slide joint (30).

13. A vehicle, in particular an automobile, comprising at least one module (60) according to one of the preceding claims.

14. A method for mounting a module (60) according to any of claims 1 to 12, wherein it comprises the steps of:
a) mounting the movable window (14) next to the fixed window (22), and inserting said part (26b) of the guide (26) into the housing (L) of the upright (62), and
b) mounting the trim element (70) on the upright so that the retaining face (72a) of said at least one member (72) engages directly or indirectly with the part of the guide.

15. The method according to the preceding claim, wherein it comprises, between the steps a) and b), a step i) of mounting a slide joint (30) in the housing (L) of the upright (62), the part (26b) of the guide (26) being engaged in a space (R) for receiving the slide joint during the step b).

16. The method according to the preceding claim, wherein the part (26b) of the guide (26) is inserted by a local elastic deformation of the slide joint (30) during the step i).

17. The method according to claim 15 or 16, wherein the upright (62) comprises a part (65) receiving a part of the slide joint (30) and the trim element (70), and another part (66) receiving another part of the slide joint and intended to extend into a casing (10a) of door (10).

18. The method according to any one of claims 14 to 17, wherein the trim element (70) is attached to the upright (62) by elastic snap-fit.
